# EUROPEAN PATENT SPECIFICATION

(11) **EP 2 221 820 B1**
(45) Date of publication and mention of the grant of the patent: **05.11.2014**
(21) Application number: 10153040.0
(22) Date of filing: 09.02.2010
(51) Int. Cl.: G11B 17/028, G11B 17/056

(54) **Disc apparatus**
Plattenvorrichtung
Appareil à disque

(30) Priority: 09.02.2009 JP 2009026946
(43) Date of publication of application: 25.08.2010
(73) Proprietor: Funai Electric Co., Ltd., Daito-shi, Osaka 574-0013 (JP)
(72) Inventor: Nishina, Yasuhiro, Daito-shi Osaka 574-0013 (JP); Okazaki, Nobuyuki, Daito-shi Osaka 574-0013 (JP)
(74) Representative: Grünecker, Kinkeldey, Stockmair & Schwanhäusser

(56) References cited:
- JP-A- 2001 023 273
- JP-A- 2003 217 220
- JP-A- 2007 058 904
- JP-A- 2007 213 687
- US-A1- 2005 188 388
- US-B1- 6 496 463

## Description

### BACKGROUND

This invention relates to a disc apparatus including a traverse chassis provided with a turn table.

Various disc apparatus each including a disc tray on which a disc is placed, a main chassis provided with the disc tray so that the disc tray can move forward and backward, a traverse chassis provided with a turn table, and a motor for moving up and down the traverse chassis between an upper position and a lower position have been known (For example, refer to Patent Documents 1 to 4).

Patent Document 1 discloses a disc apparatus wherein a disc tray moves forward and backward in a state in which a traverse chassis is disposed in a lower position. In the disc apparatus, the traverse chassis is moved up to an upper position by a motor in a state in which the disc tray is housed in a main chassis. At this time, a turn table rises and thus a disc placed on the disc tray is clamped by the turn table and a clamper. In the disc apparatus, in a case that a clamp of the disc is not normally performed, the disc tray is ejected from the main chassis.

Patent Document 2 discloses a disc apparatus wherein when a clamp state of a disc is released (unclamped), in a case that unclamp cannot be performed at a predetermined voltage, the unclamp is performed at a higher voltage than the predetermined voltage.

Patent Document 3 discloses a disc apparatus wherein, in a case that the necessary time for ejecting or housing a disc is prolonged, an applied voltage to a motor for driving a disc tray is increased.

Patent Document 4 discloses a disc apparatus wherein, in a case that a disc tray comes in contact with an obstacle when a disc tray is ejected, the disc tray is housed.
[Patent Document 1] Japanese Patent Publication No. 2007-213687 A
[Patent Document 2] Japanese Patent Publication No. 2007-58904 A
[Patent Document 3] Japanese Patent Publication No. 2008-34030 A
[Patent Document 4] Japanese Patent Publication No. 2008-84365 A

However, in the conventional disc apparatus disclosed in Patent Document 1, the disc tray is ejected in a case that clamp is not normally performed. Thus, for example, there is a problem in that the disc tray is also ejected in a case that a jam occurs in an elevating mechanism for transmitting the drive force of the motor to the traverse chassis. In this case, the user needs to perform operation of closing the disc tray again.

Patent Documents 2 to 4 do not disclose or suggest an operation of the disc apparatus in a case that clamp is not normally performed.

Document US 6,496,463 B1 discloses a disc apparatus comprising the features of the preamble of claim 1.

### SUMMARY

It is therefore one aspect of the present invention is to provide a disc apparatus capable of clamping a disc in a case that a jam occurs in an elevating mechanism.

It is therefore another aspect of the present invention is to provide a disc apparatus capable of saving user's operation for accommodating or ejecting a disc tray again in a case that a jam occurs.

According to one aspect of the invention, there is provided a disc apparatus according to claim 1.

### BRIEF DESCRIPTION OF THE DRAWINGS

Fig. 1 is a plan view of a disc apparatus according to one embodiment of the Invention.
Fig. 2 is a side view showing a state In which a traverse chassis of the disc apparatus shown in Fig. 1 is disposed in an upper position.
Fig. 3 is a plan view of the disc apparatus shown in Fig. 1 in a state that a disc tray and a beam part are omitted.
Fig. 4 is a front view of the disc apparatus shown in Fig. 1.
Fig. 5 is a side view showing a state in which the traverse chassis of the disc apparatus shown in Fig. 1 is disposed in a lower position.
Fig. 6A is a timing chart when the disc tray of the disc apparatus according to the embodiment of the invention is housed normally.
Fig. 6B is a timing chart when a clamp of a disc placed on the disc tray of the disc apparatus according to the embodiment of the invention is failed.

### DETAILED DESCRIPTION OF EXEMPLIFIED EMBODIMENTS

Exemplified embodiments of the invention are described below in detail with reference to the accompanying drawings.

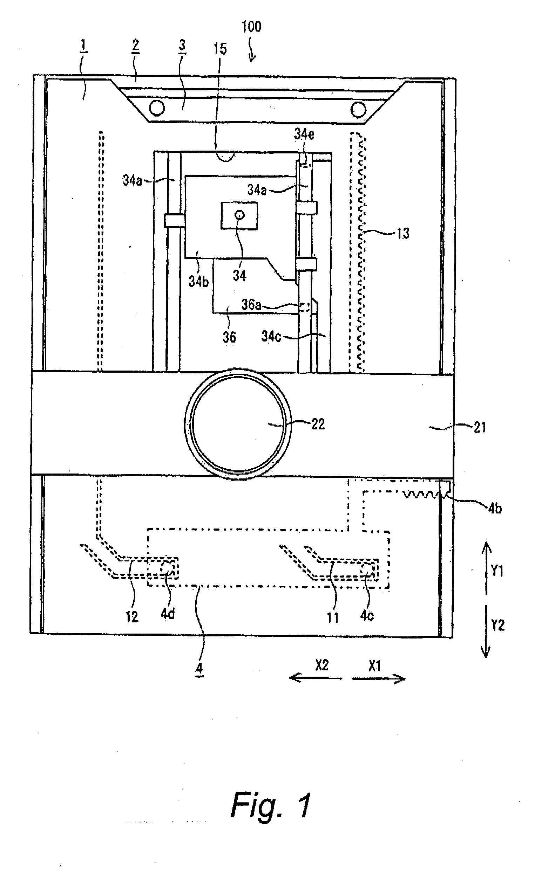

A configuration of a disc apparatus 100 according to the embodiment of the invention will be discussed with reference to Figs. 1 to 4.

As shown in Fig. 1, the disc apparatus 100 according to the embodiment includes a disc tray 1 where a disc such as a CD, a DVD, etc., (not shown) is placed, a main chassis 2 provided with the disc tray 1 so that the disc tray can be moved forward and backward, a traverse chassis 3 provided so as to be able to be moved up and down between an upper position and a lower position in the main chassis 2, and a slide member 4 provided so as be able to move in an arrow X1 direction and an arrow X2 direction. An arrow Y1 direction shown in Fig. 1 is a direction in which the disc tray is moved backward, and an arrow Y2 shown in Fig. 1 is a direction in which the disc tray is moved forward. The arrow X1 direction is orthogonal to the arrow Y1 direction, and the arrow X2 direction is opposite to the arrow X1 direction.

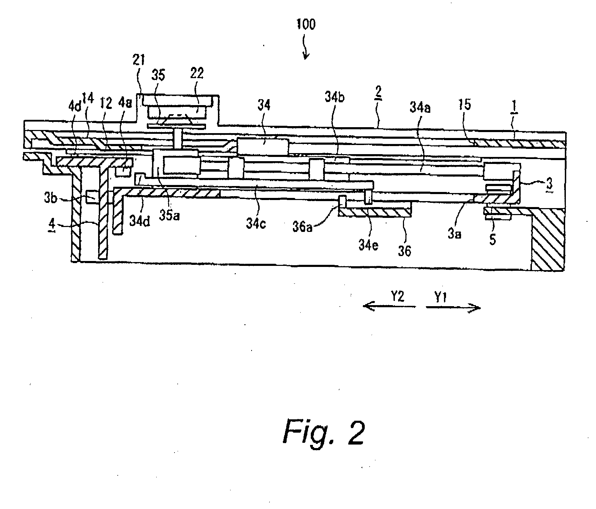

In a state in which the traverse chassis 3 is disposed in the lower position, the disc tray 1 is moved in the arrow Y1 direction and is housed in the main chassis 2, and the disc tray 1 moves in the arrow Y2 direction and is ejected from the main chassis 2. The disc tray 1 has a lower face formed with guide grooves 11 and 12 and a rack gear 13. Each of the guide grooves 11 and 12 has a horizontal groove part extending in the arrow X2 direction and inclined groove part extending in a direction crossing both of the arrow X2 direction and the arrow Y1 direction. The rack gear 13 is formed so as to extend in the arrow Y1 direction. The disc tray 1 is also formed with a recess 14 on which a disc is placed and an opening 15 where a turn table 35 described later is disposed, as shown in Fig. 2.

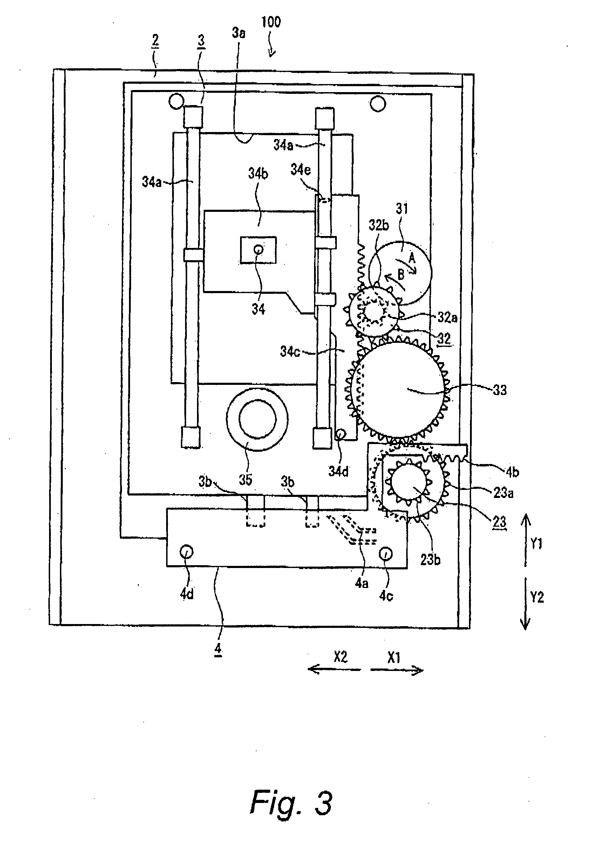

The traverse chassis 3 is attached to the main chassis 2 through an elastic member 5 on the arrow Y1 direction side. The traverse chassis 3 is disposed below the disc tray 1. The main chassis 2 is formed with a beam part 21 extending in the arrow X1 direction (see Fig, 1) above the disc tray 1. The beam part 21 is provided with a clamper 22 for clamping a disc. A gear 23 is attached to the main chassis 2 rotatably, as shown in Fig. 3. The gear 23 includes a gear part 23a engaging with a gear 33 described later and a gear part 23b capable of engaging with both of the rack gear 13 of the disc tray 1 (see Fig. 1) and a gear part 4b of the slide member 4 described later.

The traverse chassis 3 is provided with a motor 31 for moving up and down the traverse chassis 3, gears 32 and 33 for transmitting a drive force of the motor 31, and an optical pickup 34 for reading data from the disc and writing data to the disc. The gear 32 includes a gear part (not shown) engaging with a rotation shaft of the motor 31, a gear part 32a meshing with a rack gear 34c described later, and a gear part 32b engaging with the gear 33.

The optical pickup 34 is attached to a moving member 34b capable of being moved along a guide shaft 34a. The rack gear 34c is attached to the moving member 34b, The rack gear 34c is formed with an engagement part 34d projecting upward in an end part on the arrow Y2 direction side and is formed with an engagement part 34e projecting downward through an opening 3a in an end part on the arrow Y1 direction side, as shown in Fig. 2.

The traverse chassis 3 is also provided with a turn table 35 for clamping a disc, a spindle motor 35a for driving the turn table 35, and a printed board 36 formed with a controller for controlling the motor 31. The printed board 36 is provided with a push switch 36a in the end part on the arrow Y2 direction side. The push switch 36a is an example of a detector of the invention. The traverse chassis 3 is also formed with a pair of projection parts 3b in the end part on the arrow Y2 direction side.

The slide member 4 is provided in the vicinity of the end part on the arrow Y2 direction side of the main chassis 2 and is placed below the disc tray
1. The slide member 4 is formed with a guide groove 4a for engaging the engagement part 34d of the rack gear 34c and a gear part 4b extending in the arrow X1 direction, as shown in Fig. 3. The guide groove 4a has a horizontal groove part extending in the arrow X2 direction and inclined groove part extending in a direction crossing both of the arrow X2 direction and the arrow Y1 direction.

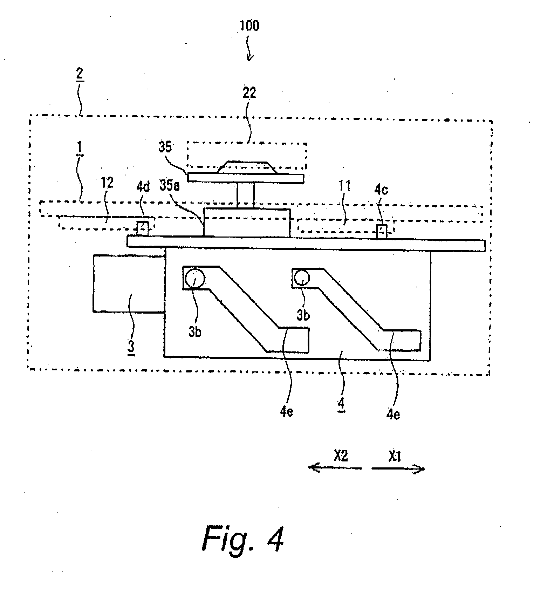

The slide member 4 is also formed with an engagement part 4c inserted into the guide groove 11 and an engagement part 4d inserted into the guide groove 12. The engagement part 4c and the engagement part 4d project upward as shown in Fig. 4. The slide member 4 is also formed with guide grooves 4e into which the projections 3b of the traverse chassis 3 are inserted. Each of the guide grooves 4e has an upper horizontal groove part extending in the arrow X1 direction, an inclined groove part extending so as be inclined downward, and a lower horizontal groove part extending in the arrow X1 direction.

In the disc apparatus 100, the gears 23, 32, and 33 and the slide member 4 constitute an elevating mechanism.

Next, the operation of the disc apparatus 100 according to the embodiment will be discussed with reference to Figs. 1 to 6.

### (Disk ejection operation)

First, the motor 31 rotates in a reverse direction, whereby the gear 32 rotates in a B direction as shown in Fig. 3. Accordingly, the rack gear 34c engaging with the gear part 32a of the gear 32 moves in the arrow Y2 direction. At this time, the gear part 23b also rotates in the same direction as the gear 32; however, engagement of the gear part 4b of the slide member 4 and the rack gear 13 (see Fig. 1) of the disc tray 1 with the gear part 23b is released and thus the slide member 4 and the disc tray 1 is not moved.

When the rack gear 34c moves to the vicinity of the end part on the arrow Y2 direction side, the engagement part 34d of the rack gear 34c comes in contact with the guide groove 4a of the slide member 4. Accordingly, the slide member 4 is moved in the arrow X2 direction and the gear part 4b of the slide member 4 engages with the gear part 23b. The gear part 23b rotates in the B direction, whereby the slide member 4 is moved in the arrow X2 direction.

At this time, the engagement part 34d of the rack gear 34c is guided by the guide groove 4a of the slide member 4 and is moved in the arrow Y2 direction, thus engaging of the rack gear 34c with the gear part 32a is released. The engagement part 34e of the rack gear 34c comes in contact with the push switch 36a (see Fig. 2), whereby the push switch 36a is turned on.

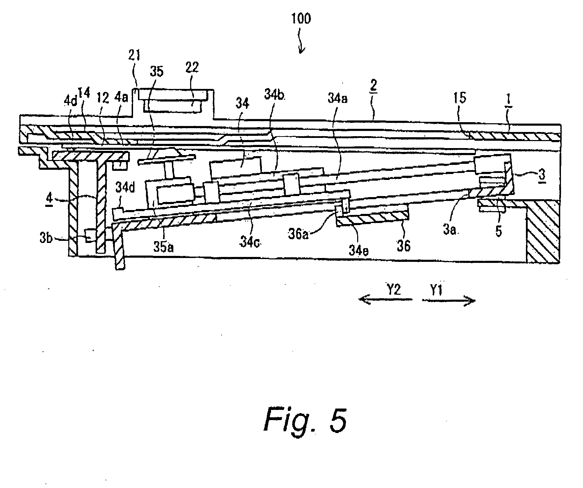

When the slide member 4 is moved in the arrow X2 direction, the projections 3b of the traverse chassis 3 are guided by the guide grooves 4e (see Fig. 4) of the slide member 4 and traverse chassis 3 is moved down to the lower position as shown in Fig. 5.

When the slide member 4 is moved to the vicinity of the end part on the arrow X2 direction side, the engagement parts 4c and 4d (see Fig. 1) of the slide member 4 come in contact with the inclined groove parts of the guide grooves 11 and 12 of the disc tray 1 respectively. Accordingly, the disc tray 1 is moved in the arrow Y2 direction, and the rack gear 13 of the disc tray 1 engages with the gear part 23b (see Fig. 3). The gear part 23b rotates in the B direction, whereby the disc tray 1 is moved in the arrow Y2 direction.

At this time, the engagement parts 4c and 4d of the slide member 4 are guided by the guide grooves 11 and 12 of the disc tray 1 and the slide member 4 is moved in the arrow X2 direction, thus engagement of the gear part 4b of the slide member 4 with the gear part 23b is released. Thus, the disc tray 1 is ejected from the main chassis 2.

### (Disc housing operation)

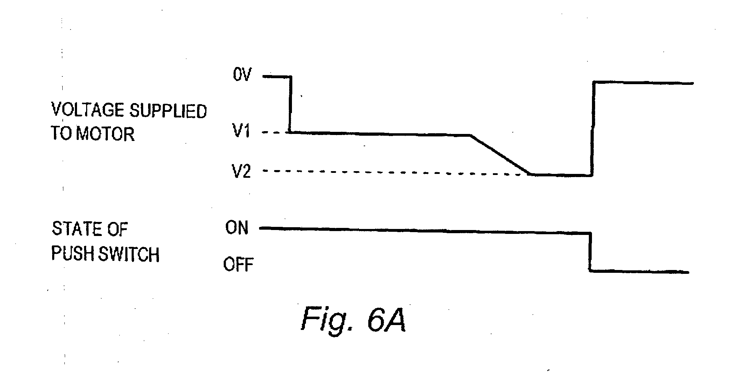

First, a tray conveying voltage V1 is supplied to the motor 31, as shown in Fig. 6A. Accordingly, the motor 31 rotates in a normal direction opposite to the reverse direction, and thus the gear part 23b rotates in an A direction opposite to the B direction (see Fig. 3). At this time, the rack gear 13 (see Fig. 1) of the disc tray 1 engages with the gear part 23b and thus the disc tray 1 is moved in the arrow Y1 direction. At this time, since engagement of the gear part 4b of the slide member 4 with the gear part 23b is released, the slide member 4 is not moved. Although the gear part 32a also rotates in the A direction, engagement of the rack gear 34c with the gear part 32a is released. Thus, the rack gear 34c is not moved.

When the slide member 4 is moved to the vicinity of the end part on the arrow Y1 direction side, the engagement parts 4c and 4d of the slide member 4 come in contact with the inclined groove parts of the guide grooves 11 and 12 (see Fig. 1) of the disc tray 1 respectively. Accordingly, the slide member 4 is moved in the arrow X1 direction and the gear part 4b of the slide member 4 engages with the gear part 23b. The gear part 23b rotates in the A direction, whereby the slide member 4 is moved in the arrow X1 direction.

At this time, the guide grooves 11 and 12 of the disc tray 1 are guided by the engagement parts 4c and 4d of the slide member 4 and the disc tray 1 is moved in the arrow Y1 direction. Thus, engagement of the rack gear 13 of the disc tray 1 with the gear part 23b is released.

Next, a clamp voltage V2 is supplied to the motor 31 as shown in Fig. 6A. Accordingly, the motor 31 continuously rotates in the normal direction and thus the gear part 23b rotates in the A direction (see Fig. 3). Accordingly, the slide member 4 is moved in the arrow X1 direction and thus the projections 3b of the traverse chassis 3 are guided by the guide groove 4e (see Fig. 4) of the slide member 4 and the traverse chassis 3 is moved up to the upper position.

When the slide member 4 is moved to the vicinity of the end part on the arrow X1 direction side, the engagement part 34d of the rack gear 34c is guided by the guide groove 4a (see Fig. 3) of the slide member 4 and the rack gear 34c moves in the arrow Y1 direction. Accordingly, the rack gear 34c and the gear part 32a engage with each other.

At this time, the guide groove 4a of the slide member 4 is guided by the engagement part 34d of the rack gear 34c and the slide member 4 is moved in the arrow X1 direction and thus engagement of the gear part 4b of the slide member 4 with the gear part 23b is released.

In a case that a disc is placed on the recess 14 (see Fig. 2) of the disc tray 1, the disc is clamped by the turn table 35 and the clamper 22. The engagement part 34e of the rack gear 34c is separated from the push switch 36a. That is, the push switch 36a has a function of detecting the traverse chassis 3 moving up to the upper position. Accordingly, as shown in Fig. 6A, the push switch 36a is turned off and thus it is determined that clamping the disc normally terminates and supply of the clamp voltage V2 to the motor 31 is stopped. Thus, the disc tray 1 is housed in the main chassis 2.

Then, the motor 31 rotates, whereby the optical pickup 34 moves in the arrow Y1 direction or the arrow Y2 direction and reading data from and/or writing data to the disc is performed.

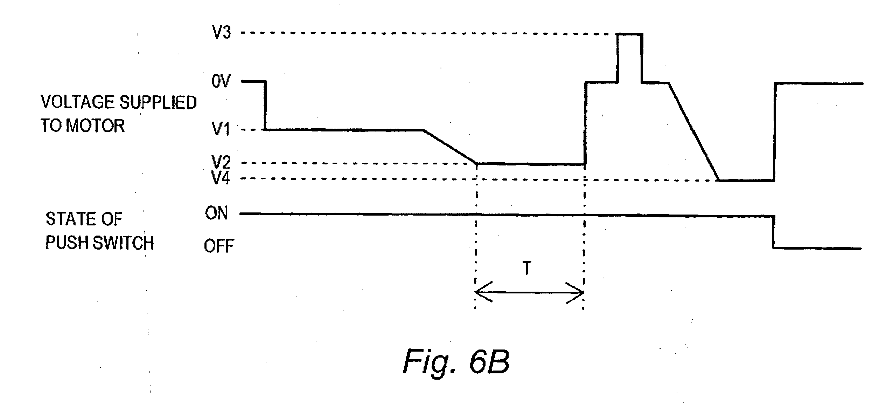

In the disc apparatus 100 according to the embodiment, as shown in Fig. 6B, in a case that the push switch 36a is not turned off although a predetermined time period T has elapsed since the clamp voltage V2 was supplied, it is determined that clamping of the disc ends in failure. The motor applied voltage is once set to 0 to stop the clamp operation and then a voltage V3 is supplied to the motor 31, whereby the motor 31 temporarily rotates in the reverse direction in a reverse time period. The reverse time period is shorter than a time period in which a cover provided in front of the disc tray 1 is opened by the disc tray 1 moved in the arrow Y2 direction and pushing the cover. The reverse time may be set based on a gap between the disc tray 1 and the cover. In this embodiment, the reverse time period is 0.05 seconds.

Then, a retry voltage V4 higher than the clamp voltage V2 is supplied to the motor 31. Then, in a case that the push switch 36a is turned off within a predetermined time period, it is determined that clamping of the disc normally ends and supplying the retry voltage V4 to the motor 31 is stopped. When clamping of the disc ends in failure in a case that the retry voltage V4 is applied, the disc tray 1 is ejected from the main chassis 2.

According to the embodiment, in a case that it is determined that clamping of the disc ends in failure, the motor 31 is temporarily backward turned and then the retry voltage V4 is supplied to the motor 31, as described above. According to the configuration, in a case that clamping of the disc ends in failure because of the jam in the elevating mechanism (the guide grooves 4e of the slide member 4 and the projections 3b of the traverse chassis 3), the motor 31 temporarily rotates in the reverse direction, whereby the jam occurring in the elevating mechanism is eliminated and then the traverse chassis 3 can be moved up, so that the disc can be clamped.

According to the embodiment, the retry voltage V4 higher than the clamp voltage V2 is supplied to the motor 31, whereby the traverse chassis 3 can be moved up by a larger force than a force when the clamp is failed first, so that the disc can be easily clamped.

According to the embodiment, in a case that the retry voltage V4 is applied, when clamping of the disc ends in failure, the disc tray 1 is ejected from the main chassis 2. According to the configuration, in a case that clamping of the disc ends in failure because the disc gets caught as the disc is not placed at a correct position of the recess 14, the disc tray 1 is ejected. Thus, damage to the disc can be suppressed as compared with the case where disc clamping is repeatedly retried or the case where the clamp voltage is made higher.

In the embodiment, the motor 31 moves the optical pickup 34, moves up the traverse chassis 3, and moves the disc tray 1. In so doing, the manufacturing cost can be reduced as compared with a case where a plurality of motors for driving the optical pickup 34, the traverse chassis 3, and the disc tray 1 are provided,

Although the present invention has been shown and described with reference to specific preferred embodiments, various changes and modifications will be apparent to those skilled in the art from the teachings herein. Such changes and modifications as are obvious are deemed to come within the spirit, scope and contemplation of the invention as defined in the appended claims.

For example, the motor 31 is temporarily backward turned and then the retry voltage V4 higher than the clamp voltage V2 is supplied to the motor 31 in the above described embodiment, but the retry voltage V4 may be the same as the clamp voltage V2 or may be lower than the clamp voltage V2.

In the embodiment described above, in a case that the push switch 36a is not turned off although the predetermined time period T has elapsed since the clamp voltage V2 was supplied, it is determined that clamping the disc ends in failure. However, in a case that the push switch 36a is not turned off although a predetermined time period has elapsed since the tray conveying voltage V1 was supplied, it may be determined that clamping the disc ends in failure.

In the embodiment described above, the motor 31 rotates in the reverse direction when the jam occurs during the disc housing operation. However, in a case that the jam occurs during the disc ejecting operation, the motor 31 may rotate in the normal direction. In this case, the detector detects that the traverse chassis 3 is disposed in the lower position.

## Claims

1. A disc apparatus (100), comprising:
a main chassis (2);
a disc tray (1), ejectably accommodated in the main chassis (2), and configured to mount a disc thereon;
a motor (31) configured to rotate in a first direction and a second direction opposite to the first direction;
a traverse chassis (3), having a turn table (35) for clamping the disc, and configured to be moved between a first position and a second position, wherein the traverse chassis (3) is moved toward the first position by a rotation of the motor (31) in the first direction and toward the second position by a rotation of the motor (31) in the second direction;
a detector (36a) configured to detect that the traverse chassis (3) is disposed in a first position; and
a controller configured to control the rotation of the motor (31),
wherein the disc is clamped when the traverse chassis (3) is disposed in the first position, and is released when the traverse chassis (3) is disposed in the second position, and
the traverse chassis (3) is moved to the first position after the disc tray (1) is accommodated in the main chassis (2), and is moved to the second position before the disc tray (1) is ejected from the main chassis (2) **characterised in that**,
in a case that the detector (36a) does not detect that the traverse chassis (3) is disposed in the first position during the rotation of the motor (31) in the first direction for a first time period, the controller allows the motor (31) to rotate only once in the second direction for a second time period, and to rotate in the first direction again after an elapse of the second time period,
the second time period is set so that the disc tray moved by the rotation of said motor (31) in the second direction does not start opening a cover provided in the main chassis, wherein the disc tray (1) is ejected, in a case that the detector (36a) does not detect that the traverse chassis (3) is disposed in the first position, after that the motor (31) rotates in the first direction again after the elapse of the second time period..

2. The disc apparatus (100) as set forth in Claim 1, wherein:
a voltage supplied to the motor (31) during the second time period is higher than a voltage supplied to the motor (31) during that the traverse chassis (3) is moved to the first position.

3. The disc apparatus (100) as set forth in Claim 1, wherein:
the disc tray (1) is moved into the main chassis (2) by the rotation of the motor (31) in the first direction and is moved so as to be ejected from the main chassis (2) by the rotation of the motor (31) in the second direction, in a condition that the traverse chassis (3) is disposed in the second position.

4. The disc apparatus (100) as set forth in Claim 1, further comprising:
an optical pickup (34), provided in the traverse chassis (3), and configured to be moved by a rotation of the motor (31) in a condition that the disc is clamped.

5. The disc apparatus set forth in Claim 1, wherein
in the case that the detector (36a) does not detect that the traverse chassis (3) is disposed in the first position, the controller determines that a clamp operation of the turn table (35) is failed, sets the voltage supplied to the motor (31) into 0 so as to stop the clamp operation of the turn table (35), and then allows the motor (31) to rotate in the second direction.

## Patentansprüche

1. Plattenvorrichtung (100), umfassend:
ein Hauptgehäuse (2);
ein Plattentablett (1), das auswerfbar in dem Hauptgehäuse (2) aufgenommen und dazu eingerichtet ist, darauf eine Platte aufzunehmen;
einen Motor (31), der dazu eingerichtet ist, sich in einer ersten Richtung und einer zweiten Richtung zu drehen, die der ersten Richtung entgegengesetzt ist;
ein Traversengehäuse (3), das einen Drehteller (35) zum Festklemmen der Platte hat und dazu eingerichtet ist, zwischen einer ersten Stellung und einer zweiten Stellung bewegt zu werden, wobei das Traversengehäuse (3) in die erste Stellung durch eine Drehung des Motors (31) in die erste Richtung und in die zweite Stellung durch eine Drehung des Motors (31) in die zweite Richtung bewegt wird;
einen Detektor (36a), der dazu eingerichtet ist zu erfassen, dass das Traversengehäuse (3) in einer ersten Stellung angeordnet ist; und
eine Steuereinheit, die dazu eingerichtet ist, die Drehung des Motors (31) zu steuern,
wobei die Platte festgeklemmt wird, wenn das Traversengehäuse (3) in der ersten Stellung angeordnet ist, und gelöst wird, wenn das Traversengehäuse (3) in der zweiten Stellung angeordnet ist, und
das Traversengehäuse (3) in die erste Stellung bewegt wird, nachdem das Plattentablett (1) in dem Hauptgehäuse (2) aufgenommen wurde, und in die zweite Stellung bewegt wird, bevor das Plattentablett (1) aus dem Hauptgehäuse (2) ausgeworfen wird,
**dadurch gekennzeichnet, dass** in einem Fall, in dem der Detektor (36a) nicht erfasst, dass das Traversengehäuse (3) in der ersten Stellung während der Drehung des Motors (31) in der ersten Richtung für eine erste Zeitperiode angeordnet ist, die Steuereinheit es dem Motor (31) gestattet, sich lediglich einmal in der zweiten Richtung für eine zweite Zeitperiode zu drehen und sich erneut in der ersten Richtung nach einem Verstreichen der zweiten Zeitperiode zu drehen,
wobei die zweite Zeitperiode derart eingestellt ist, dass das Plattentablett, das durch die Drehung des Motors (31) in der zweiten Richtung bewegt wird, nicht die Öffnung einer Abdeckung beginnt, die in dem Hauptgehäuse vorgesehen ist, wobei das Plattentablett (1) in einem Fall ausgeworfen wird, dass der Detektor (36a) nicht erfasst, dass das Traversengehäuse (3) in der ersten Stellung angeordnet ist, nachdem sich der Motor (31) erneut in der ersten Richtung dreht, nachdem die zweite Zeitperiode vergangen ist.

2. Plattenvorrichtung (100) nach Anspruch 1, bei der:
eine Spannung, die dem Motor (31) während der zweiten Zeitperiode zugeführt wird, größer ist als eine Spannung, die dem Motor (31) zugeführt wird, während das Traversengehäuse (3) in die erste Stellung bewegt wird.

3. Plattenvorrichtung (100) nach Anspruch 1, bei der:
das Plattentablett (1) in das Hauptgehäuse (2) durch die Drehung des Motors (31) in der ersten Richtung bewegt wird und derart bewegt wird, dass es aus dem Hauptgehäuse (2) durch die Drehung des Motors (31) in der zweiten Richtung in einem Zustand bewegt wird, in dem das Traversengehäuse (3) in der zweiten Stellung angeordnet ist.

4. Plattenvorrichtung (100) nach Anspruch 1, weiterhin umfassend:
einen optischen Abnehmer (34), der in dem Traversengehäuse (3) vorgesehen und dazu eingerichtet ist, durch eine Drehung des Motors (31) in einem Zustand bewegt zu werden, in dem die Platte festgeklemmt ist.

5. Plattenvorrichtung nach Anspruch 1, bei dem
in dem Fall, dass der Detektor (36a) nicht erfasst, dass das Traversengehäuse (3) in der ersten Stellung angeordnet ist, die Steuereinheit bestimmt, dass ein Klemmvorgang des Drehtellers (35) fehlgeschlagen ist, die Spannung, die dem Motor (31) zugeführt wird, auf 0 setzt, um so den Klemmvorgang des Drehtellers (35) zu stoppen, und es anschließend dem Motor (31) gestattet, sich in der zweiten Richtung zu drehen.

## Revendications

1. Appareil à disque (100) comprenant :
un châssis principal (2) ;
un plateau de disque (1) logé de manière éjectable dans le châssis principal (2) et configuré pour placer un disque sur ce dernier ;
un moteur (31) configuré pour tourner dans une première direction et dans une seconde direction opposée à la première direction ;
un châssis transversal (3) ayant un plateau tournant (35) pour bloquer le disque et configuré pour être déplacé entre une première position et une seconde position, dans lequel le châssis transversal (3) est déplacé vers la première position par une rotation du moteur (31) dans la première direction et vers la seconde position par une rotation du moteur (31) dans la seconde direction ;
un détecteur (36a) configuré pour détecter que le châssis transversal (3) est disposé dans une première position ; et
un organe de commande configuré pour commander la rotation du moteur (31),
dans lequel le disque est bloqué lorsque le châssis transversal (3) est disposé dans la première position, et est libéré lorsque le châssis transversal (3) est disposé dans la seconde direction, et
le châssis transversal (3) est déplacé dans la première position lorsque le plateau de disque (1) est logé dans le châssis principal (2), et est déplacé dans la seconde position avant que le plateau de disque (1) ne soit éjecté du châssis principal (2), **caractérisé en ce que**, dans le cas dans lequel le détecteur (36a) ne détecte pas que le châssis transversal (3) est disposé dans la première position pendant la rotation du moteur (31) dans la première direction pendant une première période de temps, l'organe de commande permet au moteur (31) de tourner une seule fois dans la seconde direction pendant une seconde période de temps, et de tourner dans une première direction à nouveau après l'écoulement de la seconde période de temps,
la seconde période de temps est déterminée de sorte que le plateau de disque déplacé par la rotation dudit moteur (31) dans la seconde direction ne commence pas à ouvrir un couvercle prévu dans le châssis principal, dans lequel le plateau de disque (1) est éjecté, dans un cas dans lequel le détecteur (36a) ne détecte pas que le châssis transversal (3) est disposé dans la première direction, après que le moteur (31) a tourné dans la première direction à nouveau après l'écoulement de la seconde période de temps.

2. Appareil à disque (100) selon la revendication 1, dans lequel :
une tension fournie au moteur (31) pendant la seconde période de temps est supérieure à une tension fournie au moteur (31) pendant que le châssis transversal (3) est déplacé dans la première position.

3. Appareil à disque (100) selon la revendication 1, dans lequel :
le plateau de disque (1) est déplacé dans le châssis principal (2) par la rotation du moteur (31) dans la première direction et est déplacé afin d'être éjecté du châssis principal (2) par la rotation du moteur (31) dans la seconde direction, dans une condition dans laquelle le châssis transversal (3) est disposé dans la seconde position.

4. Appareil à disque (100) selon la revendication 1, comprenant en outre :
un phonocapteur laser (34), prévu dans le châssis transversal (3) et configuré pour être déplacé par une rotation du moteur (31) dans une condition dans laquelle le disque est bloqué.

5. Appareil à disque selon la revendication 1, dans lequel :
dans le cas dans lequel le détecteur (36a) ne détecte pas que le châssis transversal (3) est disposé dans la première position, l'organe de commande détermine qu'une position de serrage du plateau tournant (35) est défaillante, règle la tension fournie au moteur (31) à 0 afin d'arrêter l'opération de serrage du plateau tournant (35), et permet ensuite au moteur (31) de tourner dans la seconde direction.
